# EUROPEAN PATENT APPLICATION

(11) **EP 1 783 988 A1**
(43) Date of publication of application: **09.05.2007**
(21) Application number: 06123379.7
(22) Date of filing: 02.11.2006
(51) Int. Cl.: H04M 1/2745, H04M 1/247

(54) **Method and apparatus for displaying a phone directory in a mobile communication terminal**

(30) Priority: 03.11.2005 KR 20050104910
(71) Applicant: Samsung Electronics Co., Ltd., Suwon-si, Gyeonggi-Do (KR)
(72) Inventor: Jin, Young-Kyu, Gangnam-gu, Seoul (KR); Kang, Hyun-Joo, Seocho-gu, Seoul (KR); Kim, Jae-Hwan, Suwon-si, Gyeonggi-do (KR)
(74) Representative: Grünecker, Kinkeldey, Stockmair & Schwanhäusser Anwaltssozietät

(57) **Abstract**

Provided is a method and apparatus for displaying an information directory such as a phone directory in a mobile communication terminal. The method includes, when a phone number search menu selection is detected, types of performable search categories are outputted on a display unit, and a selection of one of the search categories is received. Phone numbers in the phone directory are grouped into items relating to the selected search category received, and the items are arranged and displayed as selectable widgets on the display unit. One of the widgets is enlarged upon selection thereof to display data therein.

## Description

The present invention relates generally to a mobile communication terminal, and more particularly, to a method and an apparatus for displaying an information directory such as a phone directory in a mobile communication terminal by using spatial area information.

The use of mobile communication terminals is rapidly increasing because they are easy to carry. Service providers and terminal manufacturers are competitively developing mobile communication terminals with various special functions to attract potential users. For example, mobile communication terminals have a phone directory function, a game function, a scheduler function, a short messaging services (SMS) function, an Internet connection function, an e-mailing function, a wake-up alarm function, an MP3 (MPEG Audio Layer-3) function, a digital camera function, and various other functions.

Generally, mobile communication terminals are capable of storing information such as a predetermined number of phone numbers and the names of their corresponding owners in the phone directory function. When a user manipulates keys on a keypad, the telephone numbers stored in the phone directory can be accessed, whereupon a sought telephone number can be displayed on a liquid crystal display (LCD) of the device, so that a user can make a call using the searched phone number.

When examining the process of searching for information such as a phone number in a conventional mobile terminal, the search menu of the phone directory is displayed on the display screen through key inputs of the user. Next, when the list of names or the list of telephone numbers to be searched is selected in the search menu, the terminal changes its mode to an input mode to receive an input search. Next, when the searched language is input, the terminal searches its memory for the corresponding name and lists the search results on the display. In this way, searches for phone numbers have been conducted. Furthermore, there is a method for filtering the phone directory data according to user-input characters and displaying the data. That is, when a phone number is searched for, the data in the phone directory is displayed in the display screen in a list format. Thus, the user must move to a category of focus and make a selection to obtain a specific piece of phone directory data.

In the above conventional method, searching for information such as a phone number in a mobile communication terminal involves several stages of manipulating keys - especially, in the case of inputting names, which requires two or more stages of pressing keys. Thus, the controlling process for arriving at a stage desired by a user (i.e., operating mode) is complex and cumbersome.

The present invention has been designed to substantially solve at least the above problems and/or disadvantages and to provide at least the advantages below. Accordingly, the object of the present invention is to provide a displaying method and apparatus of information directory such as a phone directory in a mobile communication terminal.

This object is solved by the subject matter of the independent claims.

Preferred embodiments are defined in the dependent claims.

An aspect of the present invention is to provide information directory such as a phone directory displaying method and apparatus capable of displaying all categories of phone directory data on a display using spatial area information.

According to one aspect of the present invention, a method for displaying a phone directory in a mobile communication terminal includes outputting types of performable search categories on a display unit and receiving a selection of one of the search categories, when a selection for a phone number search menu is detected; grouping phone numbers stored in the phone directory into items relating to the selected search category received, arranging and displaying the items as selectable widgets on the display unit; and enlarging one of the widgets upon selection thereof and displaying data stored therein.

According to another aspect of the present invention, a mobile communication terminal for displaying a phone directory is provided. In the mobile communication terminal, a display unit outputs types of performable search categories when a selection for a phone number search menu is detected. Upon selection of the types of performable search categories, a controller groups phone numbers stored in the phone directory into items relating to the selected search category, arranges and displays the items as selectable widgets, and enlarges one of the widgets upon selection thereof and displays data stored therein.

The above and other objects, features and advantages of the present invention will become more apparent from the following detailed description when taken in conjunction with the accompanying drawings in which:
FIG. 1 is a block diagram of a mobile communication terminal according to the present invention;
FIG. 2 is a flowchart of a phone directory displaying method according to the present invention;
FIGs. 3A to 3C illustrate exemplary methods of searching for phone numbers according to the present invention;
FIG. 4 is an exemplary diagram of the sizes of widgets displayed on a screen of a mobile communication terminal according to the present invention, where the sizes correspond to the quantity of data in each widget; and
FIGs. 5A to 5D illustrate methods of displaying a phone directory on a mobile communication terminal according to the present invention.

Preferred embodiments of the present invention will be described herein below with reference to the accompanying drawings. In the following description, well-known functions or constructions are not described in detail since they would obscure the invention in unnecessary detail.

Hereinafter, a displaying method of a phone directory in a mobile communication terminal according to the present invention will be described in detail. The below description includes, but is not limited to, SMS, e-mails, multimedia message system (MMS), and enhanced message service (EMS).

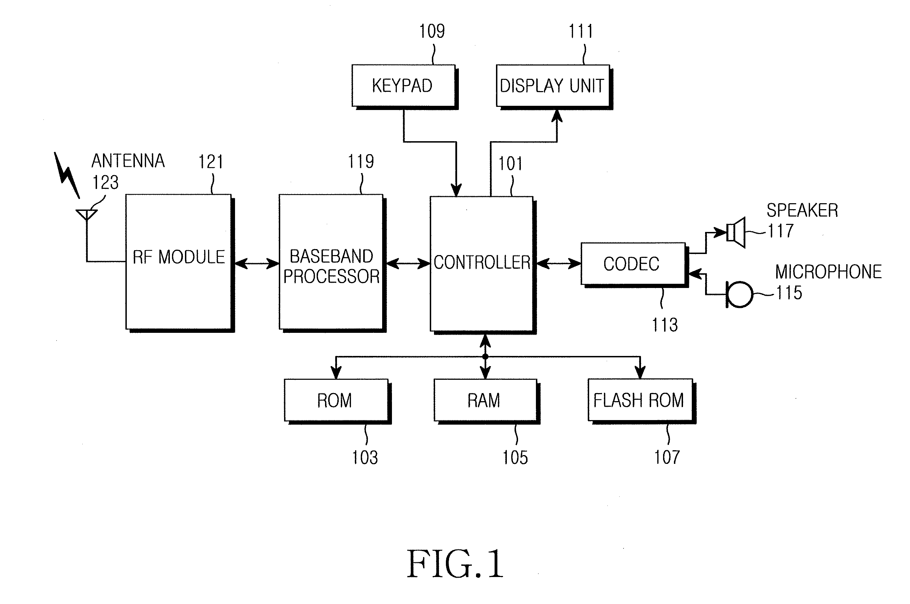

FIG. 1 is a block diagram of a mobile communication terminal according to the present invention. In the below description, the mobile communication terminal refers to a cellular phone, a Personal Communication System (PCS) terminal, a Personal Data Assistant (PDA), an International Mobile Telecommunications-2000 (IMT-2000) terminal, and other terminal types. The below description will be made referring to terminals with the general configuration of the above-described terminals.

Referring to FIG. 1, a controller (e.g., a microprocessor unit (MPU)) 101 controls the overall operations of a mobile communication terminal. For instance, it performs processing and controlling for audio communication and data communication. In addition, the controller 101 controls a function of displaying a information directory such as a phone directory using spatial area information. The ROM 103 stores microcodes of programs for the controller 101 to process ,control and store various reference data. The ROM 103 especially stores programs for displaying the phone directory using spatial area information. RAM 105 is the working memory of the controller 101, for storing temporary data generated during operations. A flash ROM 107 is used to store phone directory data and other renewable pieces of storage data.

The keypad 109 consists of a plurality of function keys including number keys for the numerals 0-9, a Menu key, a Cancel (Erase) key, an OK key, a Talk key, an End key, an Internet connection key, and navigational (or directional) keys. When a user presses a key, its corresponding input signal is sent to the controller 101. The display unit 111 displays operating information during the operations of the mobile communication terminal, numerals and characters that have been entered, various moving images and still images, etc. The display unit 111 may by a color LCD.

The CODEC 113 is connected to the controller 101, and the microphone 115 and the speaker 117 are connected to the CODEC 113. The CODEC 113, the microphone 115, and the speaker 117 serve as an audio input/output block for voice communication. The CODEC 113 converts Pulse Coded Modulation (PCM) data provided from the controller 101 into analog audio signals to output the analog audio signal through the speaker 117, and converts audio signals received through the microphone 115 into PCM data to provide the PCM data to the controller 101.

The RF module 121 down-converts an RF signal received through the antenna 123 to provide the down-converted signal to the baseband processor 119, and up-converts a baseband signal from the baseband processor 119 to transmit the up-converted signal through the antenna 123. The baseband processor 119 processes a baseband signal transmitted and received between the RF module 121 and the controller 101. For example, during a transmitting operation, the baseband processor 119 channel-codes and spreads data to be transmitted. During a reception operation, the baseband processor 119 despreads and channel-decodes a received signal.

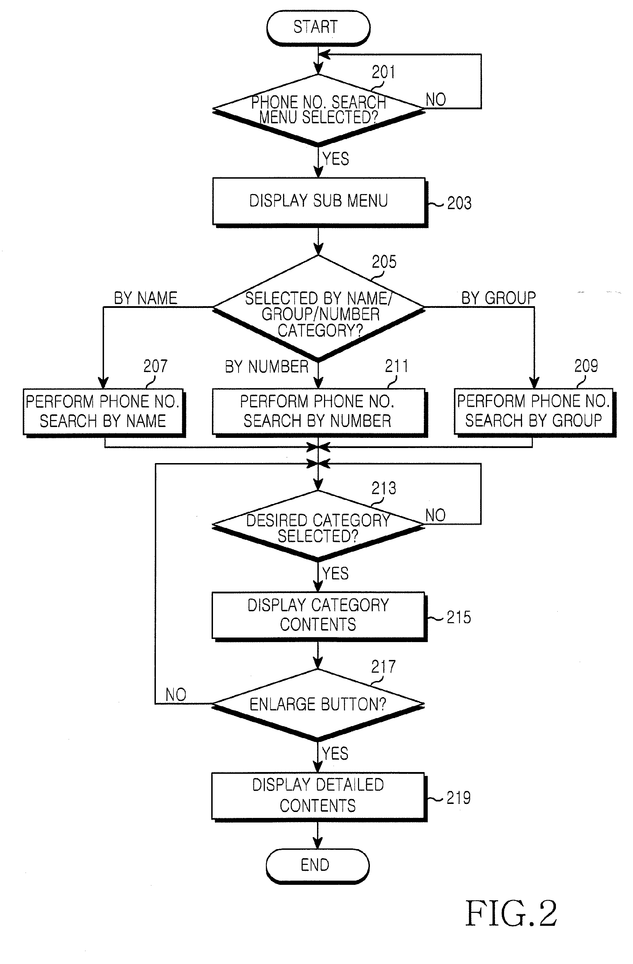

FIG. 2 is a flowchart of a phone directory displaying method according to an embodiment of the present invention.

Referring to FIG. 2, the controller 101 detects whether there is a menu selection to search phone numbers made by a user using the keys in step 201. When it is detected that a phone number search menu has been selected, the controller 101 displays a sub menu of the phone number search menu on the display unit 111 in step 203. The sub menu is divided into the search categories 'by name', 'by group', and 'by number'.

In step 205, the controller 101 detects whether a user selects the 'by name', 'by group', or 'by number' search categories . When it is detected that there is no user selection through the keys for the by name, by group, or by number search categories, the controller 101 performs other modes.

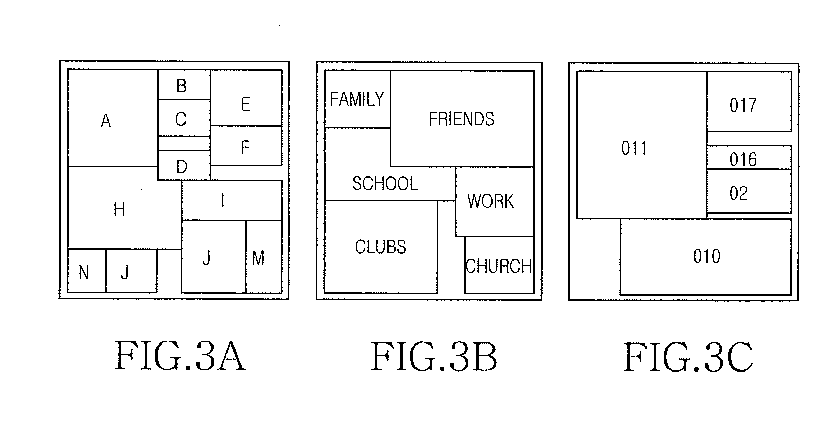

When it is detected that there is a user selection through the keys for the 'by name' search category, the controller 101 performs a phone number search by name in step 207. The searching of phone numbers by name may involve grouping the first characters of names corresponding to the phone numbers stored in the memory 107, and displaying selectable widgets of the grouped initial characters in a certain arrangement on the display screen. The sizes of the widgets are made proportional to the number of data entries in each group of initial characters. The initial characters of the names may be the English letters A, B, C, D, E, F, etc., as shown in FIG. 3A.

When key inputs for selecting search categories 'by group' are detected, the controller 101 searches phone numbers by group in step 209. A user can create, add, or delete a certain group in the phone directory, and can store phone numbers by groups. Searching phone numbers by group may involve grouping the phone numbers stored in the memory 107 into groups, displaying the groups as selectable widgets, and arranging the widgets on a display screen. The sizes of the widgets are made proportional according to the number of data entries in each group. The phone directory may be grouped into categories such as 'family', 'friends', 'school', 'work', 'clubs', and 'church', as shown in FIG. 3B.

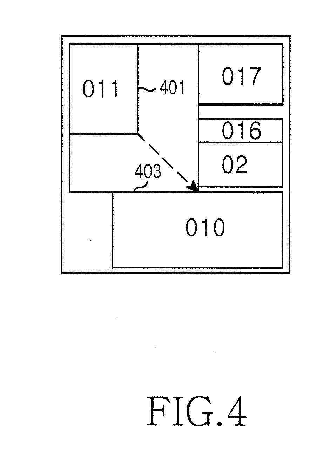

When key inputs for selecting the 'by number' search category are detected, the controller 101 performs a phone number search by number in step 211. The numbers may be sorted by their area codes, i.e., 02, 032, 061, etc., or by their mobile service providers' prefixes, i.e., 011, 010, 016, 017, etc. The phone number search by number may involve grouping the phone directory stored in the memory 107 into prefix number groups, and displaying the grouped numbers in widgets arranged on the display screen. In other words, the phone numbers in the phone directory may be grouped by prefix numbers, as shown in FIG. 3C. The sizes of the widgets are made proportional according to the number of data entries in each group. For example, when the stored number of phone numbers grouped in the first prefix group '011' occupying region 401 increases, the size occupied by the widget corresponding to prefix group '011' occupying region 401 increases proportionately to occupy region 403, as shown in FIG. 4. When phone numbers in prefix group '011' are deleted, the region taken up by the corresponding widget becomes smaller. Also, an alternate region may be provided according to an expressly-designated preference by a user.

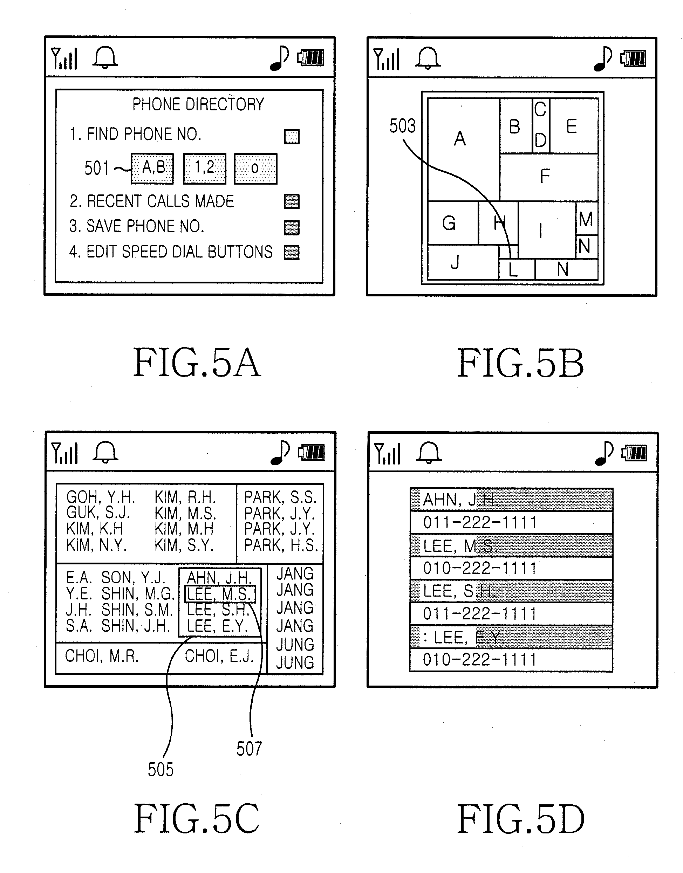

After the phone number search by name, by group, or by number that has been selected by a user is performed, the controller 101 detects in step 213 whether there is a key input by the user for selecting a desired category, for example, a selection of a certain widget displayed on the display screen. When it is detected that a certain category is selected, the controller 101 displays the contents of the selected category on the display unit 111 in step 215. In an example shown in FIG. 5, when the user presses keys to select a phone number search by name 501 from the phone number search menus in the phone directory (as shown in FIG. 5A), the phone number search by name is performed and displayed on the display unit 111 (as shown in FIG. 5B). Specifically, the selectable 'by name' category is displayed in a region of the screen dimensionally proportional to the number of phone numbers stored therein. Here, the user may select an initial character from a name entry - for example "L" 503 from the entry "Lee, M.S." The selection from the categories, that is, the selection of an initial character may be accomplished using the directional keys and the 'OK' key or by entering characters from the 3x4 numerical keypad. When a certain category is selected by the user through the keys (for example, 'L' from 'Lee, M.S.'), a zoom-in of the category is performed for displaying the contents 505 in the category. Thus, names 505 beginning with the letter 'L' can be displayed in the display unit 111.

In step 217, the controller 101 determines if there has been an enlarging key input. When it is there is no detection of such an input, the controller 101 returns to step 213 to continuously determine whether the user selects a search for a desired category. When an input of the enlarging key is detected, the controller 101 displays the specific contents of the selected category on the display unit 111 in step 219. Referring to FIG. 5, a rectangular border 507 appears around one of the names 505 beginning with 'L'. The portion selected by the border may be enlarged with the enlarging key. The enlarging through the enlarging key can be performed not only with graphics, but also with motion. When the enlarging key for enlarging a name selected by the rectangular boundary is pressed, detailed stored information corresponding to that name (for example, phone numbers) may be displayed in the display unit 111, as shown in FIG. 5D. The user can then select the searched phone number to make a call. Next, the controller 101 ends the algorithms of the present invention.

As described above, the present invention provides a phone directory displaying method that can visually present information in the phone directory application by using the spatial area information. Components such as graphics and motion may be added to the phone directory of the mobile terminal, whose content is mostly in a text format, to provide users with a new experience, satisfy their various aspirations, and depart from the mundane. Additionally, the entire phone directory can be represented on the small screen of the mobile terminal, and data can be selected without inputting text but using only directional keys and the OK/Cancel keys, for improved search efficiency. Moreover, the amount of phone numbers each category stores corresponds to the displayed size of the category on the screen, giving a user a rough idea of how many phone numbers are in each group, relatively. When the user confirms the selected category, the category is enlarged to visually provide the names stored in the category. When the enlarged category is further enlarged, a new, interactive user interface that provides further details can be accessed. Furthermore, the amount of information provided in each level to the user can be adjusted to display an optimum amount of information according to the amount of data that can be displayed on one screen.

The above method according to the present invention may be described as a method for displaying an information directory in a mobile communication terminal. The method comprises displaying search categories when search function is selected, selecting one of the search categories, grouping information stored in the information directory into items relating to the selected search category, displaying the items as selectable widgets and enlarging one of the widgets upon selection thereof and displaying data stored therein.

Also, a mobile communication terminal for displaying an information directory comprises a display unit for displaying search categories when an information search menu is detected and a controller for, upon selection of the search categories, grouping sub-information stored in the information directory into items relating to the selected search category, displaying the items as selectable widgets, and enlarging one of the widgets upon selection thereof and displaying data stored therein.

While the invention has been shown and described with reference to certain preferred embodiments thereof, it will be understood by those skilled in the art that various changes in form and details may be made therein without departing from the scope of the invention as defined by the appended claims.

## Claims

1. A method for displaying a phone directory in a mobile communication terminal, comprising the steps of:
outputting types of performable search categories on a display unit and receiving a selection of one of the search categories, when a selection for a phone number search menu is detected;
grouping phone numbers stored in the phone directory into items relating to the selected search category received, and displaying the items as selectable widgets on the display unit; and
enlarging one of the widgets upon selection thereof and displaying data stored therein.

2. The method of claim 1, wherein the types of performable search categories include at least one of a search by name category, a search by group category, and a search by number category.

3. The method of claim 2, wherein the items of the search by name category are first characters of names corresponding to the phone numbers.

4. The method of claim 2 or 3, wherein the items of the search by group category are groups specified by a user.

5. The method of claim 4, wherein the groups specified by the user are at least one from the categories of family, friends, school, work, clubs, and church.

6. The method of one of claims 2 to 5, wherein the related items of the search by number category are prefixes of the phone numbers.

7. The method of claim 6, wherein the prefixes comprise at least one of area codes and prefix numbers of mobile communication service providers.

8. The method of one of claims 1 to 7, wherein the widgets have mutually relative sizes, each of the sizes being dependant on a quantity of phone numbers grouped into a respective item displayed as a respective widget.

9. The method of claim 8, wherein the mutually relative sizes of the widgets are specified by a user according to preferences of the user.

10. The method of one of claims 1 to 9, wherein the step of displaying data stored in the selected and enlarged widget is the displaying of names corresponding to phone numbers grouped into an item of the widget.

11. The method of claim 10, further comprising pressing an enlarging key on a selected piece of data in the selected and enlarged widget, for displaying the selected piece of data in more detail.

12. The method of claim 11, wherein the data displayed in more detail is a list of the phone numbers to which the names correspond.

13. A mobile communication terminal for displaying a phone directory, comprising:
a display unit for displaying types of performable search categories, when a selection for a phone number search menu is detected;
a controller for, upon selection of the types of performable search categories, grouping phone numbers stored in the phone directory into items relating to the selected search category, displaying the items as selectable widgets, and enlarging one of the widgets upon selection thereof and displaying data stored therein.

14. The mobile communication terminal of claim 13, wherein the types of performable search categories include at least one of a search by name category, a search by group category, and a search by number category.

15. The mobile communication terminal of claim 14 or 15, wherein the items of the search by name category are first characters of names corresponding to the phone numbers.

16. The mobile communication terminal of claim 14, wherein the items of the search by group category are groups specified by a user.

17. The mobile communication terminal of claim 16, wherein the groups specified by the user are at least one from the categories of family, friends, school, work, clubs, and church.

18. The mobile communication terminal of claim 14, wherein the related items of the search by number category are prefixes of the phone numbers.

19. The mobile communication terminal of claim 18, wherein the prefixes comprise at least one of area codes and prefix numbers of mobile communication service providers.

20. The mobile communication terminal of one of claims 13 to 19, wherein the widgets have mutually relative sizes, each of the sizes being dependant on a quantity of phone numbers grouped into a respective item displayed as a respective widget.

21. The mobile communication terminal of claim 20, wherein the mutually relative sizes of the widgets are specified by a user according to preferences of the user.

22. The mobile communication terminal of one of claims 13 to 21, wherein the data stored in the selected and enlarged widget includes names corresponding to phone numbers grouped into an item of the widget.

23. The mobile communication terminal of claim 22, further comprising an enlarging key for pressing on a selected piece of data in the selected and enlarged widget and displaying the selected piece of data in more detail.

24. The mobile communication terminal of claim 23, wherein the data displayed in more detail is a list of the phone numbers to which the names correspond.

25. A method for displaying an information directory in a mobile communication terminal, comprising the steps of:
displaying search categories when a search function is selected;
selecting one of the search categories;
grouping information stored in the information directory into items relating to the selected search category;
displaying the items as selectable widgets; and
enlarging one of the widgets upon selection thereof and displaying data stored therein.

26. A mobile communication terminal for displaying an information directory, comprising:
a display unit for displaying search categories when an information search menu is detected; and
a controller for, upon selection of the search categories, grouping sub-information stored in the information directory into items relating to the selected search category, displaying the items as selectable widgets, and enlarging one of the widgets upon selection thereof and displaying data stored therein.
